**Europäisches Patentamt**

**European Patent Office**

**Office européen des brevets**

(19)

(11) Veröffentlichungsnummer: **0 032 652**
A2

# (12) EUROPÄISCHE PATENTANMELDUNG

(21) Anmeldenummer: 80730077.7

(22) Anmeldetag: 15.12.80

(51) Int. Cl.³: **C 09 D 9/00**, C 09 D 11/00

---

(30) Priorität: 15.12.79 DE 2950538

(43) Veröffentlichungstag der Anmeldung: 29.07.81
Patentblatt 81/30

(84) Benannte Vertragsstaaten: **AT BE CH DE FR GB IT LI NL**

(71) Anmelder: **Pelikan Aktiengesellschaft,
Podbielskistrasse 141, D-3000 Hannover 1 (DE)**

(72) Erfinder: **Mecke, Norbert, Dr. Dipl.-Chem.,
Schieferkamp 3b, D-3000 Hannover 91 (DE)**
Erfinder: **Schmitt, Franz Ullrich, Dr. Dipl.-Chem.,
Sporstrasse 4, D-3000 Hannover 1 (DE)**
Erfinder: **Kuchenreuther, Wieland, Ing. grad.,
Fohrbleek 12, D-3004 Isernhagen 2 (DE)**

(74) Vertreter: **Elkenberg, Kurt-Rudolf, Dr. Dipl.-Chem. et al,
Patentanwälte Elkenberg & Brümmerstedt
Schackstrasse 1, D-3000 Hannover 1 (DE)**

---

(54) **Löschflüssigkeit für Tinten.**

(57) Es handelt sich um eine Löschflüssigkeit für Tinten auf der Basis von Triarylmethanfarbstoffen, die mittels eines z. B. faserschreiberartigen Tintenlöschstiftes auf ein mit einem fehlerhaften Schriftzug beschriftetes Papier aufgestrichen wird und dadurch den Schriftzug zum Verschwinden bringt. Die Löschflüssigkeit enthält als wirksame Löschsubstanz eine basische Stickstoffverbindung in wässriger Lösung und ist auf einen pH-Wert eingestellt, bei dem die Stickstoffverbindung als freie Base vorliegt. Sie kann ggfs. auch noch ein übliches Bindemittel enthalten. Die wirksame Löschsubstanz ist in sehr geringer Konzentration von vorzugsweise 0,2 bis 1,5% Stickstoff eingesetzt.

## Löschflüssigkeit für Tinten

Die Erfindung betrifft eine Löschflüssigkeit für Tinten auf der Basis von Triarylmethanfarbstoffen, die eine die Entfärbung der Farbstoffe bewirkende Löschsubstanz und ggfs. ein Bindemittel enthält.

Seit geraumer Zeit gibt es sogenannte "Tintenlöschstifte", die nach Art eines Faserschreibers aufgebaut sind und eine Flüssigkeit enthalten, welche Tinte zu entfärben vermag. Diese Tintenlöschstifte sind insbesondere für Schüler interessant, weil sie es gestatten, etwaige beim Schreiben mit Tinte aufgetretenen Schreibfehler auf chemischen Wege durch bloßes Überstreichen mit der Löschflüssigkeit zu beseitigen. Gegenüber einem mechanischen Radieren ergibt dies den Vorteil einer einfachen und schnellen Korrektur, bei der die Struktur der Papieroberfläche im Korrekturbereich kaum beeinträchtigt wird.

Als wirksame Löschsubstanz in Tintenlöschflüssigkeiten sind eine Reihe von starken Oxidationsmitteln (wie z.B. Chlorbleichlauge) bekannt. Diese zerstören zwar viele Tintenfarbstoffe dauerhaft und sind deshalb von der jeweils vorliegenden Tintenart weitgehend unabhängig, haben sich aber im Gebrauch insbesondere durch Schüler als keineswegs problemlos erwiesen. Die Praxis ist deshalb den Weg gegangen, angepaßte Schreib-Lösch-Systeme zu schaffen durch Verwendung von bestimmten Tintenarten und von speziellen problemlosen Löschflüssigkeiten, die diese Tintenarten aufgrund spezifischer chemischer Reaktionen zu entfärben vermögen.

Das in der Praxis wohl derzeit beste und gebräuchlichste Schreib-Lösch-System besteht aus Tinten auf der Basis von Triarylmethanfarbstoffen und aus Löschflüssigkeiten auf der Basis von sulfithaltigen Lösungen. Schriftzüge aus Tinten auf der Basis von Triarylmethanfarbstoffen lassen sich nämlich leicht durch Überstreichen mit einer sulfithaltigen Lösung in sehr kurzer Zeit völlig entfärben, ohne daß die Papierbeschaffenheit sichtbar verändert wird. Allerdings ist es nach dem Löschen der fehlerhaften Schrift nicht mehr möglich, den Korrekturbereich anschließend mit der gleichen Tinte neu zu überschreiben, weil die im Papier zwangsläufig verbliebene Löschsubstanz auch dann, wenn sie bereits eingetrocknet ist, sofort wieder eine neue Lösch-Reaktion bewirkt. Deshalb muß das Überschreiben bei diesem bekannten System mit einer anderen, nicht mit Sulfiten reagierenden Tintenart geschehen, was ein zusätzliches zweites Schreibgerät erfordert und auch noch dazu führt, daß die Korrekturstelle infolge unvermeidbarer Farbabweichungen sichtbar bleibt.

Außerdem können Löschflüssigkeiten auf der Basis sulfithaltiger Lösungen auch unter der Einwirkung des Luftsauerstoffs durch Oxidation unwirksam werden. Da Tintenlöschstifte, die Wegwerfartikel darstellen, aus einem möglichst preisgünstigen Material bestehen müssen, ist ihre Wandung in der Regel mehr oder weniger stark gasdurchlässig, was zur Folge hat, daß sie auch bei Nicht-Gebrauch nur begrenzt lagerfähig sind. Erschwerend kommt dabei hinzu, daß die Oxidation von Sulfitionen eine radikalische Kettenreaktion ist, die, sobald sie einmal eingesetzt hat, verhältnismäßig rasch abläuft. Die Oxidations-Tendenz läßt sich durch Erhöhung der Sulfit-Konzentration vermindern und deshalb werden in der Praxis auch nur Löschflüssigkeiten mit einer sehr hohen Sulfit-Konzentration verwendet. Dennoch läßt es sich nicht vermeiden, daß bei aus der gleichen Charge stammenden, mit sulfithaltigen Lösungen gefüllten Tintenlöschstiften nach längerer Lagerung einzelne Stifte bereits völlig unbrauchbar geworden sind, während andere Stifte noch ihre Funktionsfähigkeit besitzen.

Mit der Erfindung sollen die aufgezeigten Mängel der bekannten Löschflüssigkeit für Tinten auf der Basis von Triarylmethanfarbstoffen vermieden werden, indem eine Löschflüssigkeit zur Verfügung gestellt wird, die auch unter Lufteinwirkung praktisch unbegrenzt haltbar ist und die es gestattet, den Korrekturbereich wieder mit der gleichen Tinte zu überschreiben.

Dieses Ziel wird erfindungsgemäß dadurch erreicht, daß die Lösung als Löschsubstanz eine basische Stickstoffverbindung in geringer Konzentration enthält und auf einen pH-Wert eingestellt ist, bei dem die Stickstoffverbindung als freie Base vorliegt.

Die Erfindung nutzt in konsequenter Weise die überraschende Erkenntnis aus, daß basische Stickstoffverbindungen, die als freie Basen vorliegen, hochwirksame Entfärbemittel für Triarylmethanfarbstoffe sind. Der Mechanismus der Entfärbereaktion ist noch nicht geklärt, aber es besteht Grund zu der Annahme, daß es sich um eine Adduktbildung zwischen den Stickstoffatomen der Stickstoffverbindung (die als Lewis-Base aufgefaßt werden kann) und den zentralen C-Atomen des Farbstoffs (der als Lewis-Säure aufgefaßt werden kann) handelt, durch die das Resonanzgefüge innerhalb der Farbstoff-Moleküle aufgehoben wird.

Grundsätzlich sind für die Zwecke der Erfindung alle anorganischen und organischen Verbindungen mit basischen Stickstoffatomen geeignet, also Ammoniak und alle sich im weitesten Sinne vom Ammoniak ableitenden organischen Verbindungen, wie Amine und Imine. Es ist vom Prinzip her lediglich Voraussetzung, daß sie als freie Base in wässriger Lösung beständig sind. Für den Gebrauch der erfindungsgemäßen Löschflüssigkeit in Tintenlöschstiften insbesondere für Schüler kommt allerdings noch hinzu, daß die Stickstoffverbindungen physiologisch unbedenklich sein müssen (was z.B. für viele monomere Amine nicht gilt).
Deshalb werden in der Praxis neben Ammoniak entweder höhermolekulare (oligomere bis polymere) organische Stickstoffverbindungen oder solche mit zusätzlichen stickstoffreien funktionellen
Gruppen bevorzugt.

Typische Beispiele für höhermolekulare Verbindungen
sind oligomere bzw. polymere Alkylenamine und -imine, bei denen
die obere Grenze für die Molekulargewichte im wesentlichen durch
die geforderte Löslichkeit bestimmt ist, in einzelnen Fällen
aber auch dadurch, daß sich bei sehr großen Molekülen eine sterische Behinderung der Adduktbildung ergeben kann. Als Verbindungen mit zusätzlichen stickstoffreien Gruppen, die auch in
monomerer Form physiologisch unbedenklich sind, kommen beispielsweise viele Aminosäuren, Aminoalkohole, Amide, Imide,
Lactame und Hydroxylammoniumverbindungen in Frage. Generell
gilt im übrigen für alle organischen Stickstoffverbindungen,
daß solche mit aliphatischen oder cycloaliphatischen Resten
gegenüber solchen mit aromatischen Resten etwas reaktiver und
deshalb zweckmäßiger sind.

Ein wesentlicher Vorteil der erfindungsgemäßen Löschflüssigkeit liegt in der praktisch unbegrenzten Lagerfähigkeit,
denn alle im Rahmen der Erfindung liegenden Löschsubstanzen
sind gegenüber dem Luftsauerstoff inert. Es kann lediglich geschehen, daß die Löschflüssigkeit, die ja im allgemeinen einen
alkalischen pH-Wert hat, im Laufe der Zeit Kohlensäure aus der
Luft aufnimmt. Das beeinträchtigt die Lagerfähigkeit aber nicht,
denn erstens ist die $CO_2$-Aufnahme (im Gegensatz zur Sulfit-
Oxidation) eine stetige und nur von der langsamen $CO_2$-Diffusion
durch die Löschstift-Wandung abhängige Reaktion, und zweitens
kann sie sich auch überhaupt erst nur dann nachteilig auswirken, wenn der pH-Wert der Lösung durch die $CO_2$-Aufnahme so
stark abgefallen ist, daß die Löschsubstanz nicht mehr als
freie Base vorliegt. In der Praxis wurde gefunden, daß mit der erfindungsgemäßen Löschflüssigkeit gefüllte Löschstifte eher
austrocknen, als daß sie durch $CO_2$-Aufnahme unbrauchbar werden.

Als weiterer wesentlicher Vorteil kommt hinzu, daß
die erfindungsgemäße Löschflüssigkeit ein Überschreiben des
Korrekturbereichs mit der gleichen Tinte gestattet. Dies beruht offenbar auf der Tatsache, daß die Löschsubstanz in sehr
geringer Konzentration von vorzugsweise 0,2 bis 1,5 % Stickstoff eingesetzt werden kann, im Vergleich zu einer bei sulfithaltigen Lösungen üblichen Konzentration im Bereich von etwa
10% $SO_3$-Ionen. Wegen dieser geringen Konzentration gelangt
beim Löschvorgang nur eine verhältnismäßig geringe Menge an
Löschsubstanz in das Papier, die zwar für einen einmaligen
Löschvorgang, aber nicht mehr unbedingt für einen mehrmaligen
Löschvorgang ausreicht. Als Folge davon verbleibt nach dem
Löschen eines fehlerhaften Schriftzuges ein nur so geringer
Überschuß an Löschsubstanz im Papier, daß bei einem anschließenden Überschreiben mit der gleichen Tinte keine oder jedenfalls
keine vollständige Löschwirkung mehr eintritt und spätestens
nach einer einmaligen bis mehrmaligen Wiederholung des Überschreibens ein dauerhafter Schriftzug im Korrekturbereich
gebildet werden kann. Da dieser Schriftzug mit der gleichen
Tinte und auch mit dem gleichen Schreibgerät aufgebracht
wurde, unterscheidet er sich kaum noch von einem Original-
Schriftzug. Lediglich sollte, wie bei Tintenlöschstiften
üblich, darauf geachtet werden, daß das Papier vor dem Überschreiben bzw. einer Wiederholung des Überschreibens ausreichend
getrocknet ist, damit die Tinte nicht in den Papierfasern
verlaufen kann.

Es ist zweckmäßig, der Löschflüssigkeit noch ein Bindemittel zuzusetzen, das in an sich bekannter Weise einer Auffaserung der Papieroberfläche im Korrekturbereich entgegenwirkt. Dabei kommen alle für diesen Zweck gebräuchlichen Bindemittel in Betracht, ihre Auswahl ist nur durch die Forderung
begrenzt, daß sie mit der Löschsubstanz verträglich sein müssen
und den pH-Wert der Lösung nicht verändern dürfen.

Nachfolgend werden einige Ausführungsbeispiele der erfindungsgemäßen Löschflüssigkeit angegeben.

Beispiel 1:

Zusammensetzung:

| | |
|---|---|
| Vulcacit TR* | 3,8 Gew.% |
| NaOH | 0,2 Gew.% |
| Wasser | 96,0 Gew.% |

(*: Vulcacit TR ist der Handelsname für ein von der Firma Bayer AG geliefertes Polyäthylenpolyamin mit einem Molekulargewicht im Bereich von 400-600.)

Die Lösung besitzt einen pH-Wert von 13 und enthält 1,2% an wirksamem Stickstoff. •

Beispiel 2:

Zusammensetzung:

| | |
|---|---|
| 4.8.11.15-Tetrazaocta-decan-1.18-diamin | 5,6 Gew.% |
| NaOH | 0,2 Gew.% |
| Wasser | 94,2 Gew.% |

Die Lösung besitzt einen pH-Wert von 13 und enthält 0,4% an wirksamem Stickstoff.

Beispiel 3:

Zusammensetzung:

| | |
|---|---|
| 4.8.11.15 Tetrazaocta-decan-1.18-diamin | 1,8 Gew.% |
| Ammoniak 25% | 3,5 Gew.% |
| Acrylharzdispersion | 8,0 Gew.% (Bindemittel) |
| NaOH | 0,5 Gew.% |
| Wasser | 86,2 Gew.% |

Die Lösung besitzt einen pH-Wert von 13 und enthält 0,8% an wirksamem Stickstoff.

0032652

Beispiel 4:

Zusammensetzung:

| | |
|---|---|
| 3-Aminopropanol | 3,0 Gew.% |
| Acrylharzdispersion | 2,0 Gew.% (Bindemittel) |
| NaOH | 0,2 Gew.% |
| Wasser | 94,8 Gew.% |

Die Lösung besitzt einen pH-Wert von 13 und enthält 0,6% an wirksamem Stickstoff.

Beispiel 5:

Zusammensetzung:

| | |
|---|---|
| n-Butylamin | 5,0 Gew.% |
| Schellack | 2,0 Gew.% (Bindemittel) |
| Wasser | 93,0 Gew.% |

Die Lösung besitzt einen pH-Wert von 12 und enthält 1.0% an wirksamem Stickstoff.

Beispiel 6:

Zusammensetzung:

| | |
|---|---|
| Glykokoll | 4,0 Gew.% |
| Styrolharzdispersion | 3,0 Gew.% (Bindemittel) |
| NaOH | 0,5 Gew.% |
| Wasser | 92,5 Gew.% |

Die Lösung besitzt einen pH-Wert von 12,5 und enthält 0,7% an wirksamem Stickstoff.

Beispiel 7:

Zusammensetzung:

| | |
|---|---|
| Polymin P* | 2,0 Gew.% |
| Acrylharzdispersion | 1,5 Gew.% (Bindemittel) |
| NaOH | 0,5 Gew.% |
| Wasser | 96,0 Gew.% |

(*: Polymin P ist der Handelsname für ein von der
Firma BASF AG geliefertes Polyäthylenimin mit
einem Molekulargewicht im Bereich von 2000 -
3000.)

Die Lösung besitzt einen pH-Wert von 13 und enthält 0,6%
an wirksamem Stickstoff.

Bei den vorstehenden Ausführungsbeispielen der erfindungsgemäßen Löschflüssigkeit hat die Löschsubstanz eine
Konzentration von 0,4 bis 1,2%, bezogen auf Stickstoff. Die
Konzentration der Löschsubstanz liegt bevorzugt im Bereich von
0,2 bis 1,5% Stickstoff und kann darüberhinaus den Bereich
von etwa 0,05 bis 5,0 % Stickstoff umfassen. Die Grenzwerte
der Konzentration ergeben sich daraus, daß bei einer zu geringen Konzentration der Löschsubstanz die Löschwirkung nicht
mehr ausreichend und bei einer zu hohen Konzentration die
Überschreibbarkeit des Löschbereiches schlechter wird.

Die vorstehenden Ausführungsbeispiele der erfindungsgemäßen Löschflüssigkeit wurden experimentell auf ihre Wirksamkeit überprüft. Es ergab sich, daß Schriftzüge aus Tinten auf
der Basis von Triarylmethanfarbstoffen in allen Fällen nahezu
sofort gelöscht wurden. Weiterhin war der Korrekturbereich,
also der mit der Löschflüssigkeit überstrichene Bereich, nach
dem Trocknen auch wieder mit der gleichen Tinte überschreibbar,
wobei die Korrektur zur Erzielung eines dauerhaften Schriftzuges gegebenenfalls wiederholt werden mußte. Die Anzahl der
notwendigen Wiederholungen des Korrektur-Schriftzuges hing
dabei etwas von der speziellen Zusammensetzung der Tinten ab,
wobei Tinten mit höherer Konzentration an Farbstoff und an
Säure (die zur Intensivierung der Farbtiefe bei Tinten üblich
ist) im allgemeinen eine etwas bessere Überschreibbarkeit
zeigten.

Patentansprüche

1. Löschflüssigkeit für Tinten auf der Basis von Triarylmethanfarbstoffen, bestehend aus einer wässrigen Lösung
einer die Entfärbung der Farbstoffe bewirkenden Löschsubstanz und ggfs. einem Bindemittel, <u>dadurch gekennzeichnet,</u> daß die Lösung als Löschsubstanz eine basische Stickstoffverbindung in geringer Konzentration enthält und auf
einen pH-Wert eingestellt ist, bei dem die Stickstoffverbindung als freie Base vorliegt.

2. Löschflüssigkeit nach Anspruch 1, <u>dadurch gekennzeichnet,</u>
daß die Löschsubstanz Ammoniak ist.

3. Löschflüssigkeit nach Anspruch 1, <u>dadurch gekennzeichnet,</u>
daß die Löschsubstanz ein oligomeres bis polymeres Alkylenamin oder Alkylenimin ist.

4. Löschflüssigkeit nach Anspruch 1, <u>dadurch gekennzeichnet,</u>
daß die Löschsubstanz eine basische Stickstoffverbindung
mit zusätzlichen stickstoffreien funktionellen Gruppen ist.

5. Löschflüssigkeit nach einem der vorhergehenden Ansprüche,
<u>dadurch gekennzeichnet,</u> daß mehrere unterschiedliche ba-
sische Stickstoffverbindungen im Gemisch miteinander als
Löschsubstanz eingesetzt sind.

6. Löschflüssigkeit nach einem der vorhergehenden Ansprüche,
<u>dadurch gekennzeichnet,</u> daß die Löschsubstanz eine Konzentration im Bereich von 0,05 bis 5,0 % Stickstoff und vorzugsweise im Bereich von 0,2 bis 1,5 % Stickstoff aufweist.